# EUROPÄISCHE PATENTANMELDUNG

(11) **EP 2 546 396 A1**
(43) Veröffentlichungstag der Anmeldung: **16.01.2013**
(21) Anmeldenummer: 11174141.9
(22) Anmeldetag: 15.07.2011
(51) Int. Cl.: D01F 2/06

(54) **Faserbündel**

(71) Anmelder: Kelheim Fibres GmbH, 93309 Kelheim (DE)
(72) Erfinder: Bernt, Ingo, 93053 Regensburg (DE); North, Matthew, 93077 Bad Abbach (DE); Roethenbacher, Reinhold, 93080 Pentling (DE); Roggenstein, Walter, 93077 Bad Abbach (DE); Scholz, Roland, 93047 Regensburg (DE)
(74) Vertreter: Nemec, Harald

(57) **Zusammenfassung**

Die vorliegende Erfindung betrifft ein Faserbündel, enthaltend eine Vielzahl von regenerierten mehrschenkeligen Cellulosefasern (1', 2'), deren Querschnitt drei oder mehr Schenkel aufweisen. Das erfindungsgemäße Faserbündel ist dadurch gekennzeichnet, dass zumindest 10%, bevorzugt zumindest 20%, besonders bevorzugt zumindest 50% der mehrschenkeligen Cellulosefasern asymmetrische Fasern sind, bei denen zumindest einer der Schenkel hinsichtlich seiner Länge von den anderen Schenkeln abweicht und bei denen die Länge eines oder mehrerer Schenkel um einen Faktor von 2 bis 10 größer ist als die Länge des oder der kürzesten Schenkel(s).

## Beschreibung

Die vorliegende Erfindung betrifft ein Faserbündel, welches eine Vielzahl von regenerierten Cellulosefaser, die durch das Viskoseverfahren erhalten werden, enthält.

Als "Faserbündel" ist eine Vielzahl von Fasern zu verstehen, so z.B. Zellwolle (eine Vielzahl von Stapelfasern), ein Strang von Endlosfilamenten oder ein Ballen aus Fasern.

Für Hygieneanwendungen wie zum Beispiel Tampons oder Saugkörper im Allgemeinen sind Fasern mit besonders hohem Flüssigkeitsspeichervermögen wünschenswert, um so eine möglichst hohe Absorptionskapazität des Hygieneprodukts zu ermöglichen.

Fasermaterialien nach dem Stand der Technik, die üblicherweise zur Herstellung von Tampons verwendet werden, sind gewöhnliche Viskosefasern, sogenannte trilobale Viskosefasern und Baumwolle. Das spezifische Absorptionsvermögen dieser Fasern beträgt nach dem weiter unten beschriebenen sogenannten Syngina-Test ungefähr 4,0 g/g für Baumwolle, 4,5 g/g für gewöhnliche Viskose und 5,2 g/g für trilobale Viskosefasern.

Das Ziel der Tamponhersteller besteht darin, mit einem minimalen Aufwand an Fasermaterial und Kosten einen bestimmten Absorptionsgrad zu erzielen.

Während Baumwolle wegen ihres ungenügenden Absorptionsvermögens als Fasermaterial für Tampons langsam ausgedient hat, sind trilobale Fasern im Vergleich zur gewöhnlichen Viskose viel teurer in der Herstellung und viel schwieriger zu Tampons zu verarbeiten.

Über viele verschiedene Ansätze zur Steigerung des Absorptionsvermögens von Cellulosefasern wurde berichtet:
1. eine chemische Veränderung durch das Aufpfropfen von Monomeren auf die Cellulosefaser
2. eine chemische Veränderung durch den Einbau von absorbierenden Polymeren wie Carboxymethylcellulose, Chitosan, Cellulosecarbamat, Alginat oder Guaran in die Cellulosefasermatrix
3. eine physikalische Veränderung der Fasern, wie z.B. Hohlfasern oder zusammengefallene Hohlfasern, wie beispielsweise aus der US-A 4,129,679 bekannt, oder
4. mehrschenkelige Fasern (sogenannte "trilobale" Fasern), die durch die Verwendung von Spinndüsen mit mehrschenkeligen Extrusionslöchern mit zumindest 3 Schenkeln mit einem Länge-Breite-Verhältnis von 2:1 1 zu 10:1 1 erhalten werden, wie beispielsweise aus der EP-A1 0 301 874 bekannt.

Der Nachteil einer chemischen Veränderung der Cellulosefaser besteht darin, dass für sehr empfindliche medizinische Anwendungen wie jener von Tampons ein kostspieliges und zeitaufwendiges toxikologisches und physiologisches Testverfahren nötig ist und das Auftreten des toxischen Schocksyndroms (TSS) die meisten Tamponhersteller von der Verwendung chemisch modifizierter Fasermaterialien abhält, obwohl die Chemikalien als sicher gelten mögen.

Der Nachteil von Hohlfasern und zusammengefallenen Hohlfasern besteht darin, dass sie wegen ihres hohen Wasserrückhaltevermögens schwierig herzustellen sind, aufgrund dessen die Fasern während des Waschens stark anschwellen und wegen der Bildung von Wasserstoffbrücken während des Trocknens aneinanderkleben, was sie im trockenen Zustand brüchig, im nassen Zustand seifig und es schwierig macht, sie aufzubrechen und in ein kardiertes Gewebe zu verarbeiten.

Die Verwendung von mehrschenkeligen, insbesondere trilobalen Fasern erfuhr während der letzten Jahre eine stetige Zunahme.

Die Herstellung mehrschenkeliger Viskosefasern wurde beispielsweise in den U.S.-Patenten 5,634,914 und 5,458,835 und in der EP-A1 0 301 874 beschrieben. Das dort geoffenbarte Verfahren beschreibt das Spinnen einer üblicherweise verwendeten Viskose, welche eine bestimmte Menge eines im Stand der Technik bekannten Modifikators enthalten kann, durch Extrusionslöcher von mehrschenkeliger Form, insbesondere trilobaler Form, in ein herkömmliches Spinnbad. Das wesentliche Merkmal dieses Verfahrens besteht darin, dass die Form der mehrschenkeligen Extrusionslöcher in der Spinndüse ähnlich der erwünschten Form des Querschnitts der Filamente ist. Gemäß den Lehren dieser Dokumente bestimmt die Geometrie des Spinndüsenlochs die Form des Faserquerschnitts, und durch ein entsprechendes Design der Extrusionslöcher kann ein bestimmtes Länge-Breite-Verhältnis des Faserquerschnitts erhalten werden.

Der Stand der Technik bezüglich mehrschenkeliger Fasern lehrt überdies, dass derartige mehrschenkelige Fasern im Vergleich zu Viskosefasern nach dem Stand der Technik ein gesteigertes Absorptionsvermögen besitzen, und zwar insbesondere in Tampons, und dass solche Fasern zumindest 3 Schenkel haben müssen und dass jeder Schenkel dieser Fasern ein Länge-Breite-Verhältnis von zumindest 2:1, am meisten bevorzugt von 3:1 1 bis 5:1, aufweisen muss. Je größer das Länge-Breite-Verhältnis ist, desto höher wären der Anteil an freiem Volumen und das Absorptionsvermögen der Fasern, vorausgesetzt, dass die Schenkel nicht so lang und dünn sind, dass sie sich auf sich selbst zurückbiegen.

In diesen Dokumenten ist auch erwähnt, dass unter den Bedingungen eines langsamen Regenerationsspinnens sogar noch höhere Absorptionsvermögen der mehrschenkeligen Fasern erzielt werden können, z.B. durch Absenken des Säurepegels und/oder Erhöhen des Sulfatpegels und/oder Zugabe eines Viskosemodifikators.

Die Tatsache, dass Hohlräume im Querschnitt von Viskosefasern das Absorptionsvermögen dieser Fasern und der daraus hergestellten Produkte erhöhen, ist weiters aus der US-A 4,362,159 bekannt.

Aus der WO 2004/085720 A ist eine massive regenerierte Standardviskosefaser bekannt, welche einen Querschnitt hat, dessen Fläche um einen Faktor von weniger als 2,50-fach, vorzugsweise weniger als 2,40-fach, besonders bevorzugt weniger als 2,25-fach, größer ist als die Fläche des größten gleichseitigen Dreiecks, das in diesen Querschnitt eingeschrieben ist, und welche ein nachfolgend definiertes Syngina-Absorptionsvermögen von mehr als 6,0 g/g Faser aufweist.

Die WO 2004/005595 A beschreibt eine saugfähige Standardviskosefaser mit einem unregelmäßigen gelappten Querschnitt. Weitere Viskosefasern mit unregelmäßigem Querschnitt sind in der US 4,129,679 und der GB-A 1,333,047 beschrieben.

Die US 6,403,217 B 1 beschreibt verschiedenste Düsenkonfigurationen zur Herstellung von Fasern mit modifizierten Faserquerschnitten nach dem Schmelzspinnverfahren. Schmelzspinnverfahren unterscheiden sich grundlegend von dem im Viskoseprozess verwendeten Nass-Spinnverfahren.

Es ist bekannt, dass bei einem aus einer Vielzahl von Fasern bestehenden Saugkörper die Dichte des Saugkörpers vor Absorptionsbeginn einen signifikanten Einfluß auf die spezifische Absorptionskapazität der Konstruktion hat. Eine geringere Dichte führt aber wiederum zu einer verringerten mechanischen Stabilität des Saugkörpers, wodurch die minimal einsetzbare Dichte nach unten begrenzt ist.

Außerdem ist oftmals eine bestimmte Gesamtabsorption für die gewünschte Produktleistung notwendig (z.B. in Tampons lt. EDANA Regulation), so dass ein Kompromiss zwischen maximaler Gesamtabsorption und maximaler Absorptionskapazität eingegangen werden muss.

Weiters ist für das Erzielen guter Saugeigenschaften in absorbierenden Produkten eine Kräuselung der Fasern vorteilhaft. Im Stand der Technik wird dazu beschrieben, Fasern mechanisch zu kräuseln. Es ist auch bekannt, das Faserherstellungsverfahren so zu variieren, dass eine inhomogene Faserbildung stattfindet. Diese beiden aus dem Stand der Technik bekannten Verfahren zur Herstellung einer gekräuselten Faser wurden entweder bei Viskosefasern bislang nicht angewendet oder ergaben nur unzureichende Ergebnisse.

Zur Überwindung der genannten Nachteile von bekannten saugfähigen Viskosefasern wird erfindungsgemäß ein Faserbündel zur Verfügung gestellt, enthaltend eine Vielzahl von regenerierten mehrschenkeligen Cellulosefasern, deren Querschnitt drei oder mehr Schenkel aufweisen, und welches dadurch gekennzeichnet ist, dass zumindest 10%, bevorzugt zumindest 20%, besonders bevorzugt zumindest 50% der mehrschenkeligen Cellulosefasern asymmetrische Fasern sind, bei denen zumindest einer der Schenkel hinsichtlich seiner Länge von den anderen Schenkeln abweicht und bei denen die Länge eines oder mehrerer Schenkel um einen Faktor von 2 bis 10 größer ist als die Länge des oder der kürzesten Schenkel(s).

Weitere Aspekte der vorliegenden Erfindung betreffen ein Verfahren zur Herstellung des erfindungsgemäßen Faserbündels sowie die Verwendung der erfindungsgemäßen Cellulosefaser sowie des erfindungsgemäßen Faserbündels.

### KURZE BESCHREIBUNG DER FIGUREN

Figur 1 zeigt die Anlagerung zweier herkömmlicher Fasern mit trilobalem Querschnitt.
Figur 2 zeigt die Anlagerung zweier erfindungsgemäßer Fasern mit unterschiedlichen Schenkellängen.
Figur 3 zeigt die Anordnung mehrerer herkömmlicher Fasern mit trilobalem Querschnitt unter Annahme einer Packung der Koordinationszahl 6.
Figur 4 zeigt die durch eine vollständig asymmetrische Ausgestaltung von Fasern resultierende sterische Hinderungen bei Anlagerung mehrerer erfindungsgemäßen Fasern.
Figur 5 zeigt eine Faser, die aus zwei miteinander an den Enden eines ihrer Schenkel verbundenen trilobalen Grundformen besteht.

### DETAILLIERTE BESCHREIBUNG DER ERFINDUNG

Die vorliegende Erfindung beruht auf der Erkenntnis, dass bei einer Veränderung der Schenkellänge und/oder -breite zumindest eines der Schenkels einer mehrschenkeligen Viskosefaser die Packungsdichte der Fasern bei gleichem Verpressungsgrad gegenüber herkömmlichen trilobalen Viskosefasern verringert werden kann.

Für die Zwecke der vorliegenden Erfindung werden Fasern, bei denen zumindest ein Schenkel hinsichtlich seiner Länge im oben angegebenen Verhältnis von den anderen Schenkeln abweicht, als "asymmetrisch" bezeichnet. Fasern, welche beispielsweise zwei gleich lange Schenkel und einen Schenkel aufweisen, der länger ist als die beiden anderen Schenkel (bei welchen also nur ein Schenkel von den anderen Schenkeln abweicht), fallen für die Zwecke der vorliegenden Erfindung ebenso unter die Bezeichnung "asymmetrisch" (auch wenn sie noch zumindest eine Symmetrieachse aufweisen können).

Bevorzugt unterscheiden sich bei der erfindungsgemäßen asymmetrischen Cellulosefaser alle ihre Schenkel hinsichtlich ihrer Länge voneinander. Für die Zwecke der vorliegenden Erfindung werden diese Fasern als "vollständig asymmetrische" Cellulosefasern bezeichnet.

Es wurde auch gefunden, dass durch einen asymmetrischen Faserquerschnitt eine unterschiedliche Koagulationsgeschwindigkeit beim Eintritt in das Spinnbad erreicht wird. Es kommt daher zur Ausbildung einer unterschiedlichen Kern-/Mantel-Struktur über den Faserquerschnitt, was in einer stärkeren Kräuselung der erfindungsgemäßen Faser gegenüber einer Faser höherer Symmetrie führt.

Beim erfindungsgemäßen Faserbündel sind zumindest 10%, bevorzugt zumindest 20%, besonders bevorzugt zumindest 50% der darin enthaltenen mehrschenkeligen Fasern asymmetrische Fasern. Bevorzugt sind alle der im Faserbündel enthaltenen Fasern asymmetrische Fasern. Besonders bevorzugt ist der Querschnitt aller im Faserbündel enthaltener asymmetrischen Fasern im wesentlichen gleich.

Das Faserbündel kann weitere Fasern, z.B. nicht mehrschenkelige Cellulosefasern, aber auch Fasern anderer Provenienz, wie z.B. aus anderen Polymeren, enthalten.

Die erfindungsgemäßen mehrschenkeligen Fasern weisen bevorzugt einen Y-förmigen, also "trilobalen" Querschnitt auf. Auch andere Querschnitte, wie z.B. X-förmige Querschnitte sind möglich.

Beim erfindungsgemäßen Faserbündel kann bevorzugt bei jeder der asymmetrischen Cellulosefasern zumindest einer der Schenkel auch hinsichtlich seiner Breite von den anderen Schenkeln abweichen.

Bevorzugt kann bei jeder dieser asymmetrischen Cellulosefasern die Breite eines oder mehrerer Schenkel um einen Faktor von 1,1 bis 5 größer sein als die Breite des schmalsten Schenkels.

Der Winkel zwischen den Schenkeln der asymmetrischen Cellulosefasern kann von 80° bis 140° betragen.

Zumindest ein Teil der Schenkel der asymmetrischen Fasern, bevorzugt alle Schenkel, weisen ein Verhältnis von Länge zu Breite von 2:1 1 bis 10:1 1 auf.

Der Titer der asymmetrischen Cellulosefasern kann von 1,3 dtex bis 10 dtex betragen.

Die asymmetrischen Cellulosefasern können in Form von Stapelfasern, Filamentfasern oder Kurzschnittfasern vorliegen.

In einer weiteren Ausführungsform der asymmetrischen Cellulosefasern ist deren Querschnitt aus zumindest zwei mehrschenkeligen Grundformen gebildet, welche Grundformen an jeweils zumindest einem ihrer Schenkelenden mit dem Schenkelende einer anderen Grundform verbunden sind.

Bevorzugt ist in dieser Ausführungsform die Länge des durch die Verbindung der beiden Schenkelenden resultierenden Verbindungsschenkels um einen Faktor von zumindest 1,5, bevorzugt 1,5 bis 2,0 länger als die Länge des kürzesten der anderen Schenkel.

Es wurde gefunden, dass bei mehrschenkeligen Cellulosefasern eine bloße Erhöhung des Fasertiters durch Verspinnen einer - bei gleichbleibender Querschnittsform - dickeren Faser keine verbesserten Eigenschaften hinsichtlich der Saugfähigkeit der Fasern bewirkt.

Die bevorzugte Ausführungsform einer aus mehreren mehrschenkeligen Grundformen gebildeten Cellulosefaser löst diese Aufgabe dadurch, dass anstelle einer Erhöhung des Titers durch proportionale Vergrößerung des Faserquerschnittes eine Vervielfachung des Faserquerschnittes erfolgt. Es werden also an mehrere mehrschenkelige asymmetrische Grundformen miteinander an ihren Schenkelenden verbunden, sodass eine größere Faser mit somit höherem Titer entsteht.

Das Verfahren zur Herstellung eines erfindungsgemäßen Faserbündels umfasst die Schritte
- Bereitstellen einer Viskosespinnmasse
- Verspinnen der Viskosespinnmasse durch mehrere Öffnungen einer Spinndüse in ein Spinnbad unter Bildung von Spinnfäden,
wobei alle Öffnungen der Spinndüse drei oder mehr Schenkel aufweisen, und ist dadurch gekennzeichnet, dass zumindest 10% der Öffnungen asymmetrische Öffnungen sind, bei denen zumindest einer der Schenkel hinsichtlich seiner Länge und/oder Breite von den anderen Schenkeln abweicht, wobei die Länge eines oder mehrerer Schenkel der Öffnungen um einen Faktor von 2 bis 10 größer ist als die Länge des oder der kürzesten Schenkel(s).

Bevorzugt sind alle Öffnungen asymmetrische Öffnungen.

Bevorzugt unterscheiden sich bei jeder der asymmetrischen Öffnungen alle Schenkel hinsichtlich ihrer Länge voneinander.

Optional kann das erfindungsgemäße Verfahren den Schritt des Mischens der mittels des Verfahrens hergestellten asymmetrischen Fasern mit anderen Fasern, z.B. symmetrischen mehrschenkeligen Fasern (bei denen also die Länge bzw. Breite aller Schenkel im wesentlichen gleich ist), nicht mehrschenkeligen Fasern und/oder Fasern anderer Provenienz, wie z.B. aus anderen Polymeren, umfassen.

Eine Mischung von asymmetrischen mit symmetrischen mehrschenkeligen Fasern kann auch durch das Verspinnen durch eine Spinndüse erreicht werden, deren mehrschenkelige Öffnungen zum Teil asymmetrisch und zum Teil symmetrisch sind.

Um asymmetrische Fasern herzustellen, bei denen auch zumindest einer der Schenkel hinsichtlich seiner Breite von den anderen Schenkeln abweicht, ist bei den asymmetrischen Öffnungen entsprechend vorzusehen, dass zumindest einer der Schenkel hinsichtlich seiner Breite von den anderen Schenkeln abweicht.

Die vorliegende Erfindung betrifft auch die Verwendung eines erfindungsgemäßen Faserbündels in absorbierenden Produkten, Hygieneartikeln, insbesondere Tampons, Inkontinenzprodukten, Hygienebinden und Pantylinern, Füllmaterialien für Bettdecken, Kissen und Schlafsäcke, Verpackungen für Lebensmitteln, insbesondere für Fleischprodukte, Papieren, insbesondere Filterpapieren, Flock, Bekleidung, insbesondere Inlay-Vliesen und Bekleidungstextilien für das Feuchtemanagement in Mischung mit anderen Fasern oder als mehrschichtige Konstruktion, und Wundauflagen.

### Beispiele:

In einer Untersuchung wurden aus herkömmlichen dreischenkeligen Viskosefasern (Marke "GALAXY®") mit drei im wesentlichen gleich langen und gleich breiten Schenkeln Tampon-Plugs mit jeweils gleicher Länge aber unterschiedlicher Dichte gepresst. Von den Plugs wurde anschließend die Syngina-Absorption (nach WSP 351.0) gemessen.

| | **Trockengewicht [g]** | **Absorption Syngina [g/g]** | **Länge vor Messung [mm]** | **Dichte vor Messung [g/cm³]** |
|---|---|---|---|---|
| **Muster 1** | 2,72 | 4,58 | 44,66 | 0,459 |
| | | | | |
| **Muster 2** | 2,74 | 4,67 | 46,95 | 0,440 |
| | | | | |
| **Muster 3** | 2,50 | 4,84 | 46,67 | 0,404 |
| | | | | |
| **Muster 4** | 2,61 | 4,77 | 46,99 | 0,419 |

Die Untersuchung zeigt, dass sich die Absorptionskapazität des Saugkörpers linear mit der Dichte des Saugkörpers zu Beginn der Messung ändert.

Es ist anzunehmen, dass die gröbere Porenstruktur, die sich in den weniger dichten Saugkörper gebildet hat, zu einer höheren Absorption führt.

Während es in der dichteren Struktur, durch die größere Zahl der Fasern, die bereits unmittelbar parallel liegen, leichter zu einem "Kollaps" bzw. einem Zusammenhaften der Fasern kommen kann, so führt der weitere Abstand der Fasern in der weniger dichten Struktur leichter zu "offenen" Poren, in denen Flüssigkeit eingelagert werden kann.

### Diskussion der Dichteverringerung für eine lokale 3-zählige Symmetrie

### Beispiel 1)

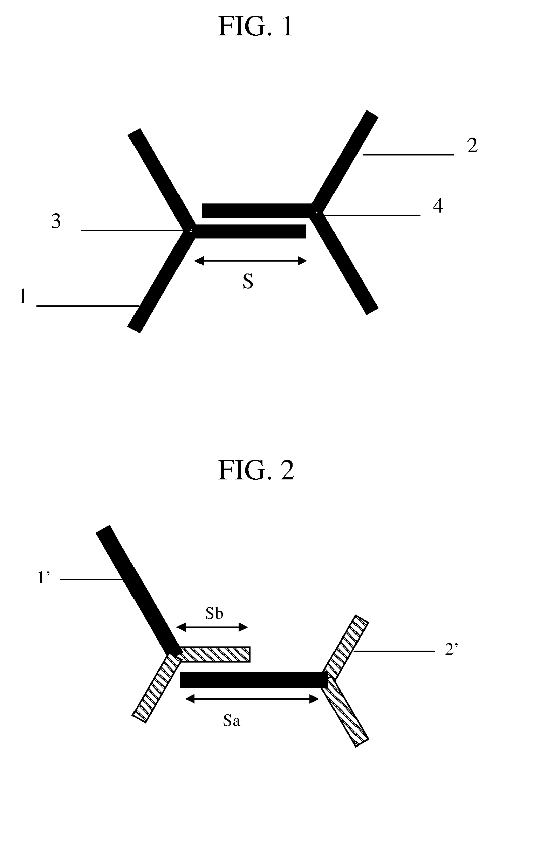

Figur 1 zeigt zwei vollsymmetrische Y-Fasern 1, 2, bei denen alle Schenkel im wesentlichen gleich lang und gleich breit sind. Diese Fasern können sich sehr nahe zusammenlagern.

Bei einer Schenkellänge von S=1 beträgt der mittlere Abstand (MA) zweier Faserzentren 3 und 4 MA = 1.

### Beispiel 2)

Eine asymmetrische Y-Faser mit einer Symmetrie-Achse habe bei gleichem Fasertiter wie die in Figur 1 dargestellte Faser die Schenkellängen Sa = 1,5; Sb=0,75 und Sc = 0,75.

Figur 2 zeigt eine Aneinanderlagerung zweier solcher Fasern 1' und 2' (dabei sind zur Veranschaulichung der längere Schenkel durchgezogen und die zwei jeweils kürzeren Schenkel schraffiert dargestellt).

Der minimale Abstand zweier Einzelfasern in nächster Nachbarschaft wird (unter der Annahme komplett starrer Flügel) durch die Länge des jeweils längeren Flügels bestimmt, wie in Figur 2 dargestellt.

Es ergibt sich damit für die Abstände um eine Faser folgendes Verhältnis:

| | | |
|---|---|---|
| Sa(1) - Sa(2) = 1,5 | Sb(1) - Sa(2) = 1,5 | Sc(1) - Sa(2) = 1,5 |
| Sa(1) - Sb(2) = 1,5 | Sb(1) - Sb(2) = 0,75 | Sc(1) - Sb(2) = 0,75 |
| Sa(1) - Sc(2) = 1,5 | Sb(1) - Sc(2) = 0,75 | Sc(1) - Sc(2) = 0,75 |
| Mittelwert = 1,5 | Mittelwert = 1,0 | Mittelwert = 1,0 |

Insgesamt ergibt sich für den Abstand zwischen zwei Fasern somit ein Mittelwert von MA=(1,5+1+1)/3=1,17

Beispiel 3)

Eine asymmetrische Y-Faser ohne Symmetrie-Elemente habe bei gleichem Fasertiter die Schenkellängen Sa = 1,4; Sb=1,2 und Sc = 0,4.

Das größte Längen:Breiten-Verhältnis der Flügel ist somit in diesem Beispiel nicht größer als im Beispiel 2.

Hier ergeben sich nach gleicher Betrachtung folgende Abstände:

| | | |
|---|---|---|
| Sa(1) - Sa(2) = 1,4 | Sb(1) - Sa(2) = 1,4 | Sc(1) - Sa(2) = 1,4 |
| Sa(1) - Sb(2) = 1,4 | Sb(1) - Sb(2) = 1,2 | Sc(1) - Sb(2) = 1,2 |
| Sa(1) - Sc(2) = 1,4 | Sb(1) - Sc(2) = 1,2 | Sc(1) - Sc(2) = 0,4 |
| Mittelwert = 1,4 | Mittelwert = 1,27 | Mittelwert = 1,0 |

Insgesamt ergibt sich für den Abstand zwischen zwei Fasern somit ein Mittelwert von MA = (1,4 + 1,27 + 1)/3 = 1,22

Es ergibt sich somit im Beispiel bei einer maximalen Verlängerung eines Flügels der Y-Struktur um 40% bei einer vollständig asymmetrischen Faser eine Vergrößerung des mittleren Faserabstands
- Gegenüber der vollsymmetrischen Faser: um 22%
- Gegenüber der asymmetrischen Faser aus Beispiel 2: um 8%

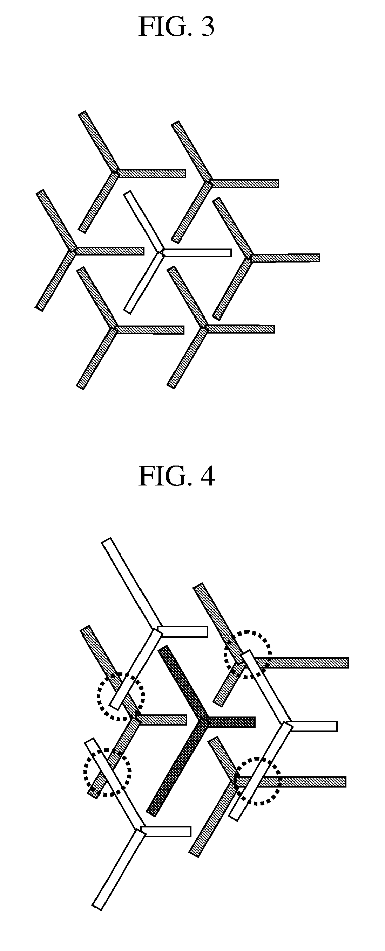

Nimmt man hingegen für die Zusammenlagerung mehrerer mehrschenkeliger Fasern ein Packungsmodell mit der Koordinationszahl 6 an, so ergibt sich die in Figur 3 dargestellte mögliche Anlagerung.

Für die Anordnung (insbesondere vollständig) asymmetrischer Fasern ist eine mathematische Voraussage der Packungsdichte nicht mehr anschaulich möglich, da sich die asymmetrischen Fasern ja zufällig anordnen und daher eine Packung geringst möglicher Dichte praktisch nicht mehr auftritt. Zudem kommt es durch die unterschiedliche Länge der Flügel zu einer sterischen Hinderung, die eine möglichst dichte Packung der Fasern verhindert, wie in Figur 4 durch Kreise dargestellt.

Ein Faserbündel, welches erfindungsgemäß asymmetrische Fasern enthält, wird daher bei Weiterverarbeitung bzw. Verpressung zu Produkten geringerer Dichte führen.

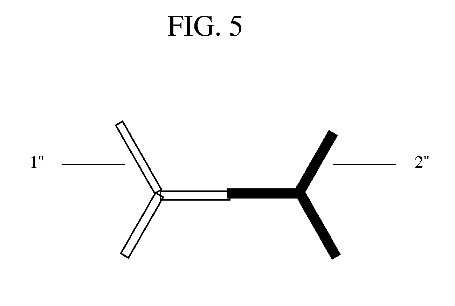

Figur 5 zeigt eine aus zwei miteinander an den Enden eines ihrer Schenkel verbundenen trilobalen Grundformen 1", 2" (welche zur Veranschaulichung schwarz bzw. weiss dargestellt sind) bestehende Faser. Die in Figur 5 gezeigten Grundformen sind vollständig symmetrisch, können aber auch asymmetrisch sein. Es resultiert eine aus zwei (bzw. gegebenenfalls auch mehr) Grundformen zusammengesetzte asymmetrische Cellulosefaser mit höherem Titer und - im Vergleich zu aus nur einer mehrschenkeligen Grundform bestehenden Fasern mit höherem Titer - erhöhter Saugfähigkeit.

## Patentansprüche

1. Faserbündel, enthaltend eine Vielzahl von regenerierten mehrschenkeligen Cellulosefasern (1', 2'), deren Querschnitt drei oder mehr Schenkel aufweisen, **dadurch gekennzeichnet, dass** zumindest 10%, bevorzugt zumindest 20%, besonders bevorzugt zumindest 50% der mehrschenkeligen Cellulosefasern asymmetrische Fasern sind, bei denen zumindest einer der Schenkel hinsichtlich seiner Länge von den anderen Schenkeln abweicht und bei denen die Länge eines oder mehrerer Schenkel um einen Faktor von 2 bis 10 größer ist als die Länge des oder der kürzesten Schenkel(s).

2. Faserbündel gemäß Anspruch 1, **dadurch gekennzeichnet, dass** sich bei jeder der asymmetrischen Cellulosefasern alle ihre Schenkel hinsichtlich ihrer Länge voneinander unterscheiden.

3. Faserbündel gemäß Anspruch 1 oder 2, **dadurch gekennzeichnet, dass** bei jeder der asymmetrischen Cellulosefasern zumindest einer der Schenkel hinsichtlich seiner Breite von den anderen Schenkeln abweicht.

4. Faserbündel gemäß einem der vorhergehenden Ansprüche, **dadurch gekennzeichnet, dass** bei jeder der asymmetrischen Cellulosefasern die Breite eines oder mehrerer Schenkel um einen Faktor von 1,1 bis 5 größer ist als die Breite des schmalsten Schenkels.

5. Faserbündel gemäß einem der vorhergehenden Ansprüche, **dadurch gekennzeichnet, dass** bei jeder der asymmetrischen Cellulosefasern der Winkel zwischen den Schenkeln von 80° bis 140° beträgt.

6. Faserbündel gemäß einem der vorhergehenden Ansprüche, **dadurch gekennzeichnet, dass** zumindest ein Teil der Schenkel, bevorzugt alle Schenkel, ein Verhältnis von Länge zu Breite von 2:1 1 bis 10:1 1 aufweisen.

7. Faserbündel gemäß einem der vorhergehenden Ansprüche, **dadurch gekennzeichnet, dass** der Titer der asymmetrischen Cellulosefasern von 1,3 dtex bis 10 dtex beträgt.

8. Faserbündel gemäß einem der vorhergehenden Ansprüche, **dadurch gekennzeichnet, dass** die asymmetrischen Cellulosefasern in Form von Stapelfasern, Filamentfasern oder Kurzschnittfasern vorliegen.

9. Faserbündel gemäß einem der vorhergehenden Ansprüche, **dadurch gekennzeichnet, dass** der Querschnitt zumindest eines Teiles der asymmetrischen Cellulosefasern aus zumindest zwei mehrschenkeligen Grundformen gebildet ist, welche Grundformen an jeweils zumindest einem ihrer Schenkelenden mit dem Schenkelende einer anderen Grundform verbunden sind.

10. Verfahren zur Herstellung eines Faserbündels gemäß einem der vorhergehenden Ansprüche, umfassend die Schritte
- Bereitstellen einer Viskosespinnmasse
- Verspinnen der Viskosespinnmasse durch mehrere Öffnungen einer Spinndüse in ein Spinnbad unter Bildung von Spinnfäden,
wobei alle Öffnungen der Spinndüse drei oder mehr Schenkel aufweist, **dadurch gekennzeichnet, dass** zumindest 10% der Öffnungen asymmetrische Öffnungen sind, bei denen zumindest einer der Schenkel hinsichtlich seiner Länge von den anderen Schenkeln abweicht, wobei die Länge eines oder mehrerer Schenkel der Öffnungen um einen Faktor von 2 bis 10 größer ist als die Länge des oder der kürzesten Schenkel(s).

11. Verfahren gemäß Anspruch 10, **dadurch gekennzeichnet, dass** alle Öffnungen asymmetrische Öffnungen sind.

12. Verfahren gemäß Anspruch 10 oder 11, **dadurch gekennzeichnet, dass** sich bei jeder der asymmetrischen Öffnungen alle Schenkel hinsichtlich ihrer Länge voneinander unterscheiden.

13. Verfahren gemäß einem der Ansprüche 10 bis 12, **dadurch gekennzeichnet, dass** bei den asymmetrischen Öffnungen zumindest einer der Schenkel hinsichtlich seiner Breite von den anderen Schenkeln abweicht.

14. Verwendung eines Faserbündels gemäß einem der Ansprüche 1 bis 10 in absorbierenden Produkten, Hygieneartikeln, insbesondere Tampons, Inkontinenzprodukten, Hygienebinden und Pantylinern, Füllmaterialien für Bettdecken, Kissen und Schlafsäcke, Verpackungen für Lebensmitteln, insbesondere für Fleischprodukte, Papieren, insbesondere Filterpapieren, Flock, Bekleidung, insbesondere Inlay-Vliesen, und Wundauflagen.
